(19)

Europäisches
Patentamt

European
Patent Office

Office européen
des brevets

(11) **EP 2 965 852 B1**

(12) **EUROPEAN PATENT SPECIFICATION**

(45) Date of publication and mention
of the grant of the patent:
**08.03.2017 Bulletin 2017/10**

(51) Int Cl.:
***B23K 26/064*** *(2014.01)*   ***G02B 5/30*** *(2006.01)*
***G02B 27/09*** *(2006.01)*   ***H01S 3/00*** *(2006.01)*
***B23K 26/06*** *(2014.01)*

(21) Application number: **15176241.6**

(22) Date of filing: **10.07.2015**

(54) **OPTICAL ARRANGEMENT FOR LASER BEAM SHAPING**

OPTISCHE ANORDNUNG ZUR LASERSTRAHLFORMUNG

DISPOSITIF OPTIQUE POUR CONFORMATION DE FAISCEAU LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.07.2014 LT 2014090**

(43) Date of publication of application:
**13.01.2016 Bulletin 2016/02**

(73) Proprietors:
• **UAB Altechna R&D**
  **18412 Vilnius (LT)**
• **UAB "EKSPLA"**
  **02300 Vilnius (LT)**

(72) Inventors:
• **GERTUS, Titas**
  **LT-08499 Vilnius (LT)**
• **MICHAILOVAS, Andrejus**
  **LT-06325 Vilnius (LT)**

(74) Representative: **Zaboliene, Reda**
**METIDA Law Firm Zaboliene and Partners**
**Business center VERTAS**
**Gyneju 16**
**01109 Vilnius (LT)**

(56) References cited:
**WO-A1-2012/150566**

• **W. W. SIMMONS ET AL: "Optical Beam Shaping
  Devices Using Polarization Effects", APPLIED
  OPTICS, vol. 13, no. 7, 1 July 1974 (1974-07-01),
  page 1629, XP055228297, WASHINGTON, DC; US
  ISSN: 0003-6935, DOI: 10.1364/AO.13.001629**
• **WEN CHENG ET AL: "Compact flattop laser beam
  shaper using vectorial vortex", APPLIED OPTICS,
  OPTICAL SOCIETY OF AMERICA,
  WASHINGTON, DC; US, vol. 52, no. 19, 1 July 2013
  (2013-07-01), pages 4608-4612, XP001583359,
  ISSN: 0003-6935, DOI:
  HTTP://DX.DOI.ORG/10.1364/AO.52.004608**
• **EGGLESTON J M ET AL: "RADIAL INTENSITY
  FILTERS USING RADIAL BIREFRINGENT
  ELEMENTS", JOURNAL OF THE OPTICAL
  SOCIETY OF AMERICA, AMERICAN INSTITUTE
  OF PHYSICS, NEW YORK; US, vol. 71, no. 10, 1
  October 1981 (1981-10-01), pages 1264-1272,
  XP000709554, ISSN: 0093-5433, DOI:
  10.1364/JOSA.71.001264**

## Description

Field of invention

This invention is related to devices for light intensity control which can be used to form a desirable shape of a laser beam transverse profile. Also, this invention relates to apodisers by which Gaussian-shaped intensity distribution is converted into a distribution with a flat central part.

Background of the invention

There are known laser beam shapers by which a desirable shape of a transverse intensity distribution (beam profile) may be obtained.

In numerous applications, laser beam profile with a flat central part, known as a flat-top beam, has many advantages against a traditional Gaussian beam. In material microprocessing, higher resolution and better processing quality is achieved with the laser beam having a uniform intensity across the whole processed area and substantially zero intensity at adjacent regions. Also, a pump beam having a flat-top intensity profile is preferential in quantum or parametric amplification because it creates a more homogeneous illumination of a laser or parametric crystal. Analogously, a flat-top seed laser beam overlaps an active area better, and higher gain efficiency is achieved. Finally, a laser beam with a flat central part causes a parabolic thermal lens which does_not degrade beam quality. The parabolic thermal lens may be easily compensated. A steepness of edges of the beam intensity transverse profile determines how the beam diverges on optical elements' apertures. Intensity ripples and hot spots arising due to diffraction are main factors limiting the maximum achievable power in laser systems.

The flat-top beams mathematically may be approximated by super-Gaussian functions. Laser beam shapers that convert Gaussian beams into flat-top beams are most frequently called as apodisers.

The simplest beam shaping methods comprise combining of several laser beams into a single: by selecting powers of each beam a desired intensity distribution may be composed as a mosaic (see, for example, *Yanbing Jiang et al.*, "Beam-shaping method for uniform illumination by superposition of tilted Gaussian beams", Opt. Eng. 49, 044203 (2010)). These techniques are more suitable for shaping of incoherent light. Combining of multiple coherent light beams would cause interference-related inhomogeneities in a resulting intensity distribution.

Other laser beam shapers may be categorized into the following groups:

1) diffractive elements, apertures;
2) elements possessing a spatially variable absorption;
3) elements possessing a spatially variable refraction;
4) optical arrangements employing a spatially variable polarisation control;
5) other, e.g., deformable mirror matrices, micro-lens matrices, elements with coatings having a continuously varying reflectivity, elements with a frustrated total internal reflection, etc.

Some of beam shapers may be assigned to several of the described groups.

Patent US5638220 describes a laser beam shaper for conversion of an elliptically or rectangularly shaped laser beam into a beam having a circular symmetry, namely, into a ring-shaped laser beam. A basis of this shaper lies in interposing a diaphragm between a collimator lens and a target and, also, in selection of an appropriate diaphragm's diameter and distances between said optical components. The ring-shaped laser spot is formed as a result of diffraction on hard edges of a diaphragm's aperture. Applications and an optical system, in which a projector comprising said beam shaper is used, do not require high beam quality or high power conversion efficiency. On the contrary, the use of hard apertures (diaphragms with hard edges) in laser systems is highly disadvantageous due to strong diffraction effects, which are difficult to compensate.

Utilisation of apertures in forming of flat-top beams is highly inefficient since only a very central part of the initial Gaussian beam is used in order to obtain a flat top. Additionally, means for making "soft" edges must also be utilised in order to avoid strong diffraction and other adverse effects such as self-focusing. "Soft apertures" are accomplished by making a serrated edge of their openings (as described in US patent US3977772 and in J.M.Auerbach et al., "Serrated-aperture apodizers for high-energy laser systems", Appl. Optics 33(15), 3179-3183 (1994)). Alternatively, an optical window may have a gradual variation of the refractive index of a material (see N.I.Potapova et al., "Apodization of laser radiation by phase apertures", Sov. J. Q. Electron 22(5), 419-422 (1992)). Unfortunately, power conversion efficiency of this type of beam shapers does not exceed 10%.

With the use of beam shapers comprising deformable mirror matrices (as, for example, described in WO2014014805, US8292441 and US7019434) any arbitrary shape of a transverse intensity profile may be formed. However, fabrication of said matrices is challenging and cost-consuming. There are only a few commercial providers of such elements. Performance limits of this kind of beam shapers is strictly related to a size of an individual piece of a mirror (pixel), and also on a precise control of driving voltages. The main drawback is that any fluctuations of driving voltages may destroy the whole optical system. Therefore, they are mostly used for correction of aberrations of incoherent light beams in astronomy and microscopy. In powerful laser systems, passive methods of beam shaping are a priority choice.

In US4410237 another beam shaper is described: a key component is a transmissive or reflecting diffraction grating, preferably a transmissive phase plate surface of which has two height levels. Its surface relief pattern is selected to provide wave interference resulting in a desired beam shape at far field or at focal plane of a lens. The zeroth diffraction order together with the split plus and minus first diffraction orders can form a quasi-flat-top beam. A wavefront of the laser beam is not preserved by this shaping technique, moreover, a desired intensity distribution is obtained only with the use of a lens and only in its focal plane. Secondly, two parameters of the resulting beam profile - flatness of the central part and steepness of the edges - are dependent on each other, i.e. it is not possible to obtain a uniform intensity at the central part when making steep edges and, vice versa, grating's parameters, that ensure flat intensity profile at the centre, do not provide steep edges of the profile. A trade-off between flatness of the top and steepness of the edges of the profile must be made. Further, rectangular shape of steps in gratings' surface relief leads to existence of higher diffraction orders which do not take part in creation of the resulting beam profile and, therefore, energy losses are unavoidable. Also, the relief must be made with precision of a half of a wavelength, thus requires high-precision lithographic technologies.

A beam shaper presented in US6975458 comprises a blazed diffraction grating wherein the grating surface relief pattern is asymmetric about an optical axis and about an axis perpendicular to the optical axis. The saw-tooth like relief results in that optical power is concentrated in a single diffraction order, also this type of grating is less sensitive to manufacturing errors. However, despite a higher efficiency of the grating itself, at least one additional lens that must be present in a beam shaping setup sets dimensions of the system and the flat-top beam is obtained only in a single plane.

In US3990786 and US4017164 another laser beam shaping element is described. The beam shaper comprises an optical window having a certain thickness wherein a central part of the window is transparent while at the edges chambers are formed and filled with an absorptive liquid. A diameter of the transmissive central part is gradually varying along the laser beam propagation direction, i.e. within a thickness of the window, and a law of said variation of the diameter of the transmissive central part is such that laser beam diffraction on the window's edges is minimized. Thus, such a beam shaper also acts as a soft aperture - rays of the beam (portions of the beam) of the laser beam located at the edges experience losses, central rays remain unaffected, while transition between said region introducing losses and said lossless region is smooth. Due to good matching of refractive indices at transparent central part of the window and at the absorptive edges, a wavefront of the traversing laser beam is preserved. This beam shaper is suitable for use in a laser system where there is an aim to protect its elements from optical damage due to nonlinear wavefront distortions, i.e. from intensity ripples that would arise at diffraction on apertures of the unshaped Gaussian beam. However, it is not suitable for applications where a central part of the beam needs also to be affected. Finally, it requires a good heat removal in order to ensure a constant refractive index across the window, and therefore, to preserve the beam wavefront.

US3558208 describes yet another laser beam shaping arrangement which comprises an intensity filter with a radially variable absorption having a highest value at the centre and placed between collimating and imaging lenses. The central part of the beam is attenuated by said filter, while wings of the initially Gaussian beam are blocked by an aperture of a collimating lens. Said arrangement followed by a polygonal scanning mirror, destined primarily for use within a laser recorder, provide a uniform energy density in a target. Said radially variable absorption of the filter is created by a geometry of an absorbing medium sample which may be liquid or solid. An exact solution requires parabola-like shape, however a spherical surface may also be used. Further, a cover of an index-matching material is also required in order to preserve a beam wavefront. In the description of current solution a theoretical possibility of a constant thickness and radially variable index of absorption is also suggested with no practical examples of realisation given. Current solution also has several disadvantages. First, it is hard to ensure good thermal removal and optical contact between the filter and its cover when solid-state absorbing (and/or index-matching) materials are used. On the other hand, cuvette is necessary for liquid absorber with an ensured steady pumping for heat removal and uniform distribution of an absorbing pigment. This beam shaper is more suitable for low- or moderate-power optical systems.

In general, all beam shapers based on absorption operated only up to powers below damage threshold of the absorptive medium. Moreover, laser beam distortions may arise even far below the damage threshold due to index inhomogeneities caused by residual heat.

US3476463 presents a laser beam shaper based on a spatially variable refraction. The beam shaping arrangement is constructed from two or more lenses, wherein at least one of surfaces of said lenses is aspheric that yields redistribution of light intensity in a transverse plane. The beam shaper can be used for conversion of an axially symmetric laser beam profile, for example, of a Gaussian shape into a beam profile of another shape, mainly a shape with a flat central part. It is possible to ensure that a beam wavefront is preserved when certain conditions for curvatures and distances of lenses are satisfied. Due to the absence of absorption, the current beam shaping system features a high optical damage threshold, hence, is suitable for high-power laser systems, though requires high precision in fabrication and, later, in alignment of the lenses. A system of several aspheric elements located at distances is highly sensitive to alignment of the arrangement and to laser beam pointing instabilities.

Yet another modification of a refractive-type laser beam shaper is described in US6943964: the beam shaper consists of a monolithic optical element having two aspheric surfaces. It is also possible to design surface profiles for not affecting a wavefront of a traversing laser beam. By minimising a number of surfaces, higher power efficiency is attained, but sensitivity to beam pointing variations remains since a certain distance between said aspheric surfaces is necessary in this type of beam shaper.

An alternative to said aspheric lenses, wherein spatially variable refraction is achieved by only a geometrical shape of the elements while their refractive index is constant, are elements possessing a spatial variable index of refraction, such as gradient-index (GRIN) lenses, example of which is given in US3486808. Again, this is a technology that requires special manufacturing knowledge and equipment.

Utilisation of liquid crystal matrices (also called as spatial light modulators) is yet another alternative for laser beam shaping. Forming of a flat-top beam is presented in Haotong Ma et al., "Generation of flat-top beam with phase-only liquid crystal spatial light modulators", Journal of Optics 12, 045704 (2010), but, in general, formation of almost any desired beam intensity distribution is possible. A matrix pixel size is the main limiting factor that determines the accuracy of the formed beam profile. However, an organic nature of liquid crystals limits application field of SLMs in shaping of incoherent or low-power coherent light beams. Also, high stability of active control system must be ensured in order to not damage the whole system upon variations of driving signals.

A laser beam shaper according to the preamble of claim 1 is known from W. W. SIMMONS ET AL: "Optical Beam Shaping Devices Using Polarization Effects", APPLIED OPTICS, vol. 13, no. 7, 1 July 1974 (1974-07-01), page 1629-1632, XP055228297.

Solutions involving a spatially variable polarisation control are closest to a solution of the present invention by technical spirit. Polarisation control elements alone perform as polarisation converters, while together with polarisation analysing elements - act as intensity attenuators. Elements for polarisation control only are described in numerous patents and patent applications, for example in US8077289, US6191880, US8320043, US2007115551, WO2011021444, WO2012150566. Beam shaping arrangements based on analogous polarisation controlling elements are also known, see for example patents US4679911, US6259055, as well as articles *G.Giuliani et al.*, "Radial birefringent element and its application to laser resonator design", Optics Letters 5 (11), 491-493 (1980), J.Eggleston et al., "Radial intensity filters using radial birefringent elements", JOSA 71 (10), 1264-1272 (1981).

A polarisation converter of the patent #289 is constructed from multiple segments of optically active crystals, birefringent crystals or phase retardation plates. Therefore, polarisation of portions of the beam at various transverse coordinates, can be affected differently. This beam shaper was designed to solve certain problems in microlithography when linear polarisation is spoiled in a long optical chain. Utilisation of this polarisation converter for apodisation of laser beam intensity profile is not defined in a description of said patent.

In the patent #880, yet another segmented polarisation converter is described, which is composed of multiple π-retardation plates. Separate phase retardation plates have different orientations: their principal axes are oriented so that an incident linearly polarised laser radiation experience different local rotations of polarisation plane. A pattern of local polarisations is constructed so that an output laser radiation becomes radially polarised. In this solution, the possibility to form a desirable beam polarisation pattern is directly related to the technological limitations of cutting the distinct phase retardation plates and to combine them into a single optical component. This element cannot ensure an ideal flatness of a surface of said combined optical element what leads to beam wavefront distortions.

In the patent #043 yet another linear-to-radial or linear-to-azimuthal polarisation converter is presented which comprises from a continuous piece of an optically active material by forming a gradually increasing thickness with an increasing azimuthal angle. Variation of the thickness in radial direction is absent. As a result, rays of the traversing linearly polarised beam located at different azimuthal coordinates experience a different rotation of polarisation plane. A straightforward realisation of this converter is an optical element having a helical surface. This element is not hard to fabricate but has a drawback because it changes a wavefront according to its surface relief. For the use in an optical system a compensating element from a transparent material not featuring optical activity and having a mirrored shape is needed. Other than helical surface relief and polarisation rotation pattern is not defined in current solution.

The patent #911 describes a laser beam shaper comprising a cuvette filled with liquid crystals with an inserted convex-convex lens. An inner thickness of the cuvette coincides with the largest thickness of the lens, therefore, the lens contacts the walls of the cuvette and chambers of the same size in front of the lens and behind the lens are formed which are then filled with liquid crystals of opposite chirality. An impact on the traversing laser beam may be described as follows: rays in a central part propagate through transparent windows of the cuvette and the transparent lens, hence experience no absorption losses; however, peripheral rays of the beam do. The liquid crystals in the front chamber make a circular polarisation from the initially linear, while liquid crystals in the second chamber, since have opposite chirality, reflect said circularly polarised light. Therefore, liquid crystals in the front chamber act as a polarisation transforming optical element, while liquid crystals in the second chamber act as a polarisation analyser. A curvature of lens surfaces create a radially variable thickness of chambers: it is gradually increasing towards the edges of the cuvette. Therefore, peripheral rays experience highest losses. By matching indices of refraction of liquid crystals and lens material it is possible to attain minimal wavefront distortions. The beam shaper operates extremely selectively - affect only a certain wavelength. This beam shaper enables formation of a flat-top intensity profile but has limited possibilities to form any arbitrary shape of the beam.

The articles of *G.Giuliani et al.* and *J.Eggleston et al.* present another optical element with radially variable polarisation control which together with a polariser acts as a beam shaper used inside laser resonator for improvement of a transverse profile of a laser beam. A radial polarisation control element is an element of a birefringent material fabricated as a lens. A thickness, and therefore, phase retardation is a function of radial position. One may say said radial birefringent element acts as a waveplate an impact of which on light polarisation depends on a distance from element's centre. Since a linear polariser transmits only one polarisation component, while reflects the orthogonal one, a joint impact of said radial birefringent element and polariser is a spatially (radial variation only) variable transmission/reflection. If radiation from laser resonator is outputted through the polariser, a transmission distribution $T_{XY}$ of this two-component arrangement of the beam shaper coincides with a spatial variation of reflection of the polariser. Several geometrical realisations of said radial birefringent element are suggested in said articles: a shape of a plano-concave or plano-convex lens, or a set of two lenses with opposite convexities. It is easy to obtain a transmission distribution $T_{XY}$ with a single peak at the centre with a gradually decreasing transmission outwards from the centre. Also, under certain parameter range, another shape of transmission distribution $T_{XY}$ having a local minimum ($\neq 0$) can be obtained. This is particularly suitable for obtaining a transverse intensity profile of the laser beam characterised by a flat central part and steep edges. A task is centred in selection and capability of practical realisation of geometry of lens or lenses. This limits of current beam shaping to several shapes of beam profiles. Further, geometry of a lens-like birefringent element makes changes in a beam wavefront what needs to be encountered in calculations of resonator design or an additional compensating lens has to be used.

In an international patent application #566 (*Beresna et al.*) yet another space-variant polarisation converter operating in the visible spectral range is described. Again, a different impact on polarisation of the traversing laser beam depending on a coordinate in converter's aperture is created, but a distribution of the polarisation states is varied more freely and precisely in XY plane. The polarisation converter is a single optical element of an optically transparent material, such as fused silica, with anisotropic regions inscribed by the known ultrafast laser direct writing technique. A unique property of some glasses - induction of birefringence - is employed. By exposing a sample with ultrashort, preferably femtosecond, pulses self-assembly (or self-organisation) of material occurs: periodic nanostructure in sub-wavelength scale is formed. An induced structural periodicity exhibits form-birefringence, i.e. refractive indices for two orthogonal polarisation components are unequal. Locally, the sub-wavelength periodic structure, so-called nanograting, acts as an individual waveplate introducing a phase retardation between polarisation components oriented along the waveplate's principal axes.

The main idea of the solution of *Beresna et al.* lies in that a constant retardance (phase retardation) is inscribed, while a spatially variable polarisation control is attained by differently orienting said nanogratings at various transverse coordinates. Scanning of a sample in a spiral trajectory and simultaneously controlling polarisation direction of the writing radiation of femtosecond pulses enables inscription of a spatially variable birefringence. This is because orientation of principal axes (axes at which index of refraction has highest and lowest values) of said local waveplate is strictly related to nanogratings orientation, while orientation of nanogratings depend on polarisation direction of the writing beam. Further, a size of a volume in which nanogratings are inscribed and a net retardance depend on energy of femtosecond writing pulses, focusing condition and material properties. In the patent application of *Beresna et al.*, there are two alternative configurations of the polarisation converter proposed - with an inscribed quarter-wave and half-wave waveplate for wavelengths in the visible spectral range. Then, depending on the polarisation of the initial laser beam, radially or azimuthally polarised laser beam is obtained at the output, while its wavefront is preserved. According to yet an alternative realisation of the current solution, an optical vortex can be obtained. An orientation distribution of nanogratings, required for the above mentioned tasks, is given. Said polarisation distributions featuring cylindrical symmetry have an annular beam intensity distribution, while adding an additional polariser gives intensity distribution of two peaks. The current solution is not destined to formation of any other beam profiles. Also, there no suggestions for polarisation converter's configuration for other than visible wavelengths, e.g. from an infrared spectral range.

Formation of self-assembled double-refracting nanogratings in fused silica was firstly demonstrated more than ten years ago (L.Sudrie et al., "Writing of permanent birefringent microlayers in bulk fused silica with femtosecond laser pulses", Opt. Communications 171, 279-284 (1999)). Since then it has been intensively explored and finds more and more new applications.

Said phenomenon has also been demonstrated in other than fused silica glasses. Among suitable materials are other silica-like glasses: $GeO_2$, $TeO_2$, also silica doped with Ge, F, P and $TiO_2$. Ultrashort pulses can induce birefringence, though much smaller, in borosilicate glasses as well. A more explicit overview of suitable materials may be found in M.Lancry et al., "Ultrafast nanoporous silica formation driven by femtosecond laser irradiation", Laser & Photonics Reviews 7 (6), 953-962 (2013); M.Lancry et al., "Dependence of the femtosecond laser refractive index change thresholds on the chemical composition of doped-silica glasses", Opt. Mat. Express 1 (4), 711-723 (2011); S.Richter et al., "Laser induced nanogratings beyond fused silica - periodic nanostructures in borosilicate glasses and ULE™", Opt. Mat. Express 3 (8), 1161-1166 (2013). New materials are constantly explored. Numerous parameters - pulse duration, wavelength, energy or fluence of the writing radiation, as well as focusing conditions, also orientation of nanogratings in adjacent regions - that govern formation of self-assembled nanogratings. An optimal set of parameters for ultrafast direct laser writing have to be found for a specific task individually. The main characteristics and advantages of the elements fabricated by said technique are: compactness, stability in time and to thermal conditions, high damage threshold. Despite there are numerous publications in this field, no laser beam shapers for formation of a flat-top beam or a beam with an arbitrary intensity profile have beam proposed yet.

We find that the beam shaping arrangement presented in the articles of *G.Giuliani et al.* and *J.Eggleston et al.* is the closest prior art to our invention, where a combination of the polarisation converter with the spatially variable birefringence and the consequent analysing polariser creates a transmission distribution having a predetermined shaped. A particularly interesting configuration is that where transmission distribution $T_{XY}$ has a local minimum ($\neq 0$) in the centre. The configuration of two birefringent lenses allows for independent selection of a depth of the dip in the middle (i.e. transmission value of said local minimum), and simultaneously zero transmission can be obtained at a desired radial distance. However, operation of this shaping arrangement highly depends on precision of fabrication of the curved birefringent elements and, as already mentioned before, curved surfaces distort the wavefront of the laser beam. Finally, there are limited possibilities to create any desirable transmission distribution $T_{XY}$.

The aim of this invention is to provide a laser beam shaping optical system suitable for high-power and high repetition rate laser systems. It is also an aim of this invention to provide a laser beam shaper for formation of a laser beam with a transverse intensity profile of any desirable shape having minimal impact on a curvature of a wavefront. It is yet another aim of this invention to create an apodiser for conversion of a Gaussian beam into a flat-top beam described by a super-Gaussian function of any order.

Summary of the invention

The essence of the beam shaping technique of the present invention is utilisation of an element featuring a spatially variable polarisation control, which is fabricated by aforementioned ultrafast laser direct writing technique. Creation of any polarisation control and transmission pattern is possible. This invention is also centred on determination of orientations of the double-refracting nanogratings needed for obtaining a desirable transmission distribution of the shaper.

According to the present invention, an optical arrangement for laser beam shaping comprises a polarisation transforming optical element which has a different impact on polarisation of an incident laser radiation at various transverse coordinates in said element's aperture. Further, the beam shaping optical arrangement also comprises a polarisation analysing optical element, transmission and reflection of which depends on polarisation orientation of radiation incident to this optical element. Said polarisation transforming and polarisation analysing optical elements, arranged in a series on an optical path of an input laser beam, which is polarised linearly and has a certain curvature of its wavefront, together contribute to spatially variable power losses and create a predetermined transmission pattern, defined by a distribution $T_{XY}$. As a result, an output laser beam is formed having an intensity distribution $I_{XY1}$ at a plane perpendicular to laser beam propagation direction. Said formed intensity distribution $I_{XY1}$ of the output laser beam does not coincide with an intensity distribution $I_{XY0}$ of the input laser beam. Said polarisation transforming optical element has features of a phase retardation plate, and is fabricated from a transparent and optically isotropic material by forming in its volume at least one anisotropic layer with double-refracting nanogratings resulting from self-assembly of said material due to exposure of linearly polarised femtosecond laser radiation, wherein equal phase retardations between two orthogonal polarisation components at all transverse coordinates of said formed at least one anisotropic layer are attained, while said different impact on polarisation of the incident radiation at various transverse coordinates is achieved by selecting proper angles between orientations of fast axes of said double-refracting nanogratings and a linear polarisation direction $P_0$ of the input laser beam. A wavefront of the formed output laser beam coincides with the wavefront of the input laser beam within one half of a wavelength.

In one configuration of the present invention, an optical arrangement for laser beam shaping comprises a polarisation transforming optical element with the inscribed in-volume anisotropic layer/layers a total thickness of which ensures phase retardation of $\pi$ radians between two orthogonal polarisation components to be attained at all transverse coordinates of said anisotropic layer/layers.

In a second configuration of the present invention, an optical arrangement for laser beam shaping comprises a polarisation transforming optical element with the inscribed in-volume anisotropic layer/layers a total thickness of which ensures phase retardation of $\pi/2$ radians between two orthogonal polarisation components to be attained at all transverse coordinates of said anisotropic layer/layers, while the optical arrangement also includes a quarter-wave plate placed on the optical path of the input laser beam before the polarisation transforming optical element.

Preferably, said transparent and optically isotropic material from which the polarisation transforming optical element is fabricated is fused silica. Alternatively, the polarisation transforming optical element can be fabricated from other silica-like glasses, for example, $TiO_2$:$SiO_2$.

In a preferred embodiment of the present invention, said polarisation analysing optical element is a linear polariser, while the output laser beam is obtained from radiation which is transmitted by said polariser. In an alternative embodiment of the present invention, the output laser beam is obtained from radiation which is reflected by the polariser.

Said distribution $T_{XY}$ defining an transmission pattern of the beam shaping arrangement is suitable for conversion of an input laser beam with a Gaussian profile into an output laser beam characterised by a purely flat-top, super-Gaussian or any arbitrary transverse profile.

A spectral range for which the beam shaping arrangement of this invention can beam accomplished covers wavelengths from 400nm to 1550nm.

Further, according to the present invention, utilisation of said beam shaping arrangement in laser systems is proposed. The beam shaper may be placed between an oscillator and an amplifier or between any adjacent amplifiers in a series of amplifiers. Additionally, spatial filtering system and half-wave plates can be inserted.

The beam shaper of this invention is compact and features high resistance to high optical power, also is cheap and allows for creation of any desirable shape of transmission pattern - any symmetric or asymmetric function. Differently from the beam shaper of the prior art, a geometrical and optical path for the traversing laser radiation is identical at all transverse coordinates. This results in preservation of a beam wavefront (at least within a half wavelength of radiation). Small dimensions leads to low sensitivity of operation of the beam shaper to laser beam pointing fluctuations and divergence variations.

Since intensity local attenuation is achieved by reflection (alternatively, by transmission) and there is no absorption, the beam shaping arrangement can be employed in high-power laser systems.

Yet another advantage of the beam shaper of the present invention is high efficiency if compared with the known beam shaping solutions suitable for use in high-power laser systems. When transforming a Gaussian beam profile into a profile defined by a super-Gaussian function of the sixth order, total power losses, including those due to scattering on inhomogeneities arising during inscription of said anisotropic layer/layers in the polarisation transforming optical element, do not exceed 50%. Due to high efficiency of the shaper, higher power of the whole laser system can be obtained. On the other hand, low-power primary sources (e.g. low-brightness pump diodes) can be employed in order achieve a certain predetermine output power of the system, what reduces a price of a system and allows to use optical components with lower resistance optical damage.

The invention is explained in greater detail in the following drawings.

Brief description of the drawings

Fig.1-a principle scheme of a laser beam shaper of this invention.

Fig.2 - a more detailed explanatory illustration of an operation of the laser beam shaper of this invention.

Fig.3 - illustration of the laser beam shaper of this invention utilised for conversion of a Gaussian beam into a flat-top beam.

Fig.4A - theoretical transmission function (cross-section along one transverse coordinate of a calculated transmission distribution $T_{XY}$) required for a conversion of the Gaussian beam shape into a shape characterised by a super-Gaussian function of the 6-th order.

Fig.4B - one of possible realisations of nanogratings' orientations in order to obtain the transmission function of Fig.4A.

Fig.5 and Fig.6 - experimental results.

Fig.7A, Fig.7B - transmission function required for a conversion of the Gaussian beam into a super-Gaussian beam of the 4-th order and an appropriate nanogratings' orientation function.

Fig.8A, Fig.8B - transmission function required for a conversion of the Gaussian beam into a super-Gaussian beam of the 8-th order and an appropriate nanogratings' orientation function.

Fig.9 - an alternative realisation of the laser beam shaper of this invention.

Fig.10 - a front view of a polarisation transforming optical element which is a base element of the laser beam shaper of this invention.

Fig.11 - a photo of the polarisation transforming optical element.

Figs.12-15 - variants of incorporation of the laser beam shaper of this invention into optical schemes.

Fig.16 - an example of a laser beam intensity distribution lacking circular symmetry.

Fig.17 - transformation of a laser beam profile, initially having a dip in the middle, when it propagates through a side-pumped laser amplifier.

Fig.18 - formation of the beam profile having a dip in the middle using the laser beam shaper of this invention.

Description of the preferred embodiments

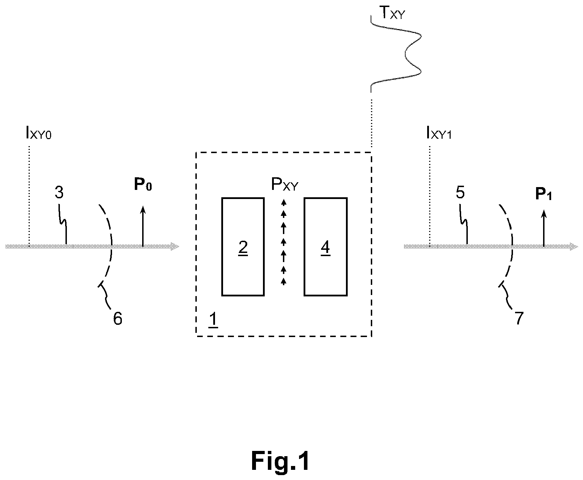

In Fig.1, a block scheme of a laser beam shaper of this invention is shown. It explains a principle of this invention. The laser beam shaper 1 is composed of the following components: an optical element 2 which affects polarisation of an input laser beam 3, as well as an optical element 4 which transmits or reflects only one polarisation. The element 2 acts as a structured phase retardation plate as if it was composed of multiple phase retardation plates having a different effect on polarisation of the input laser beam 3. Therefore, the element 4 which acts as the polarisation analyser has unequal transmission (or reflection) for rays of the laser beam transmitted through various transverse coordinates in cross-section of the element 2. One may think the element 2 creates a certain polarisation pattern $P_{XY}$, while in a combined action of the elements 2 and 4 a transmission pattern $T_{XY}$ is created. As a result, the linearly polarised laser beam 3 traversing the beam shaper 1 experiences local power losses changing the beam profile.

Said optical element 2 is fabricated from a transparent and optically isotropic material by forming in-volume regions exhibiting optical anisotropy, i.e. characterised by two indices of refraction (this phenomenon is also called double-refraction or birefringence). These anisotropic (birefringent) regions are formed utilising the previously described ultrafast laser direct writing technique by selecting a proper pulse energy and polarisation direction of a writing femtosecond radiation. Said optically isotropic material, making a basis of the element 2, in which said birefringent regions are formed, is fused silica or other glasses in which ultrashort laser pulses can inscribe sub-wavelength nanogratings, i.e. induce form-birefringence. A list of these materials includes silica doped with $TiO_2$ or other dopants, as well as $GeO_2$ glass.

The birefringent regions with the inscribed nanogratings act as individual phase retardation plates introducing a phase shift between two orthogonal polarisation components oriented along fast and slow axes of the nanogratings. On the contrary to solution of the closest prior art, the beam shaper 1 of the present invention neither focuses nor defocuses the beam, i.e. a curvature of a wavefront is preserved, at least within a half of a wavelength. This is because a smooth transition between adjacent birefringent regions is created during fabrication of the optical element 2 without leaving gaps with unaffected material, and the average index of refraction is the same in all regions. Wavefront distortions due to two values of refractive index in birefringent regions do not exceed a half of a wavelength. These distortions do not affect dioptric power of the system since are similar to distortions arising due to a free-space beam diffraction.

Thus, the optical element 2 is a polarisation transforming element having a predetermined polarisation control pattern dependent upon transmission distribution $T_{XY}$ which is required for a particular beam shaping task. The initial laser beam 3 incident to the beam shaper 1, which is characterised by the linear polarisation (vector $P_0$), an initial intensity distribution $I_{XY0}$ and a certain curvature of a wavefront 6, results in an output laser beam 5 with another intensity distribution $I_{XY1}$ having a wavefront 7 practically coinciding with the initial wavefront 6. A polarisation of the output laser beam 5 is linear, while its direction $P_1$ depends on a transmission axis orientation of the polarisation analysing element 4.

Generally, radiation that is transmitted or reflected by the optical element 4 may be used as the output beam 5. The laser beam shaper 1 of this invention may be employed in high-power laser systems since is absorptionless. Power conversion efficiency depends on shapes of initial and output intensity distributions $I_{XY0}$ and $I_{XY1}$ (their ratio determines a theoretical limit of power conversion efficiency). Also, there are additional power losses associated with Rayleigh scattering on inhomogeneities arising during birefringence inscription inside the optical element 2. These power losses are approximately the same in a cross-section of the beam and do not exceed 15%. Total power losses of the laser beam shaper 1 of the present invention do not exceed 50%, and that is a really good indicator when compared with the known beam shaping solutions suitable for use in high-power laser systems.

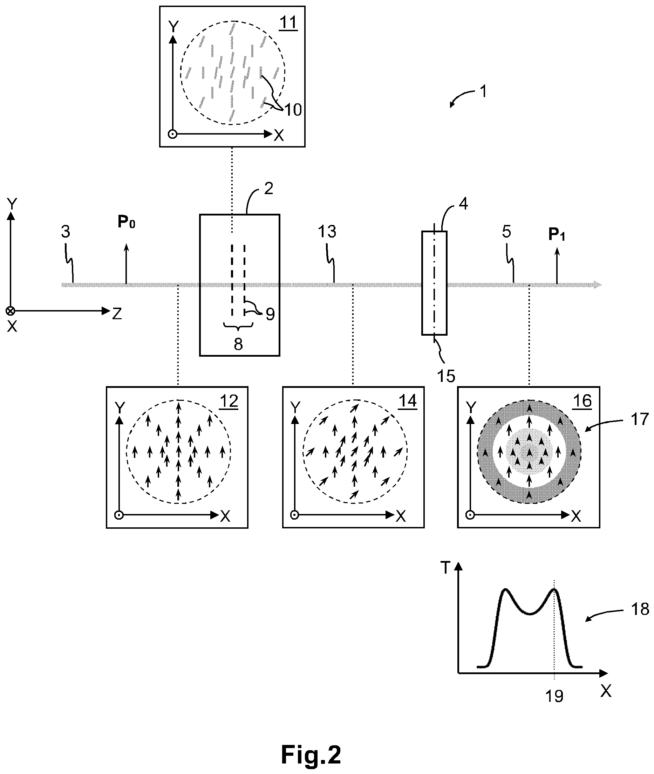

A more detailed illustration of the optical element's 2 structure and explanation of a performance of the whole beam shaper 1 is given in Fig.2. Depending on a wavelength for which the beam shaper is designed, one or more layers 8 of birefringent regions 9 are inscribed in a volume of the optical element 2. Each said birefringent region 9 consists of multiple sub-wavelength double-refracting nanogratings. Parameters of the writing ultrafast radiation are selected to attain equal phase retardations between two orthogonal polarisation components in all transverse coordinates of the anisotropic layer 8, while orientations of nanogratings vary. An area in which birefringent regions 9 with nanogratings are inscribed (transversal dimension of the layer 8) is larger than a diameter of the laser beam 3 that is transformed.

In a preferable embodiment of the present invention the optical element 4 is a linear polariser and the element 2 has a total thickness of the anisotropic layers 8 such that a net phase difference (also called retardance) between two orthogonal polarisation components is equal to $\pi$ radians. Thus, the optical element 2 may be thought as if constructed of multiple half-wave plates, also called π-retardation plates. It is known that an impact of the half-wave plate on linear polarisation is the following: linear polarisation state is preserved, while its orientation may be altered - if a fast axis of the half-wave plate makes an angle α with the initial polarisation direction, a plane of polarisation is rotated by 2α angle with respect to the initial polarisation direction at the output of said wave plate. Thereby, a pattern 11 of said nanogratings may be created in which orientations of fast axes 10 of nanogratings make different angles with the polarisation direction $P_0$ of the incident beam 3 depending on a coordinate in XY plane. At some transverse coordinates fast axes 10 of nanogratings make a larger angle, while in other - a smaller angle with the polarisation direction $P_0$ of the incident beam 3. As a result, necessary polarisation pattern $P_{XY}$, and, consequently, beam shaper's transmission distribution $T_{XY}$ are obtained. $P_{XY}$ and $T_{XY}$ are easily estimated from the incident (initial) and the desired output intensity distributions $I_{XY0}$, $I_{XY1}$.

In order to transform the incident laser beam 3 with any initial intensity distribution $I_{XY0}$ into the laser beam 5 with any arbitrary intensity distribution $I_{XY1}$ a required transmission distribution $T_{XY}$, which is continuous if $I_{XY0}$ and $I_{XY1}$ are continuous, may be calculated from a relationship $T_{XY} \sim I_{XY1}/I_{XY0}$, where a constant of proportionality is found by normalising the transmission distribution to have maximum value equal to one.

The incident laser beam 3 having a linear polarisation at all transverse coordinates, where all local polarisation vectors are mutually parallel (pattern 12) results in a laser beam 13 with a spatially inhomogeneous polarisation pattern $P_{XY}$ (14) at an output of the optical element 2, while local polarisation remains linear.

Further, the linear polariser 4 transmits only those polarisation components that are oriented along its optical axis 15. It is evident from a resultant polarisation pattern 16 at the output of the polariser 4 that transmission (a pattern 17 of grey-scaled concentric circles - a simplified version of two-dimensional $T_{XY}$ distribution, curve 18 - a transmission function along one transverse coordinate, i.e. a cross-section of a continuous $T_{XY}$ distribution) is highest at those transverse coordinates (19), where polarisation vectors in the polarisation pattern 14 are parallel to the optical axis 15 of the polariser 4.

Patterns 11, 12, 14, 16 of orientations of nanogratings and polarisation vectors in Fig.2 are shown for illustrative purposes only. In reality they are continuous two-dimensional functions which may not necessarily have a circular symmetry and are dependent on the desired $T_{XY}$ distribution for a specific laser beam shaping task, also on a transmission/reflection direction (orientation of the optical axis 15) of the analysing polariser 4.

According to the first embodiment of this invention the optical axis 15 of the polariser 4 is oriented parallel to the initial polarisation vector $P_0$. In this case the polarisation transforming optical element 2 is fabricated so that in coordinates, where highest transmission of the beam shaper 1 is needed, fast axes 10 of nanogratings are also oriented along said vector $P_0$. Polarisation direction $P_1$ of the output laser beam 5 is also parallel to $P_0$.

There are also possible other configurations of the beam shaper of this invention: the optical axis15 of the polariser 4 is perpendicular or makes a certain angle with the initial polarisation direction $P_0$. In these cases other patterns of nanogratings' orientations is required in order to get the same $T_{XY}$. On the other hand, the already-fabricated optical element 2 having a certain internal nanogratings pattern can be utilised to obtain several transmission distributions. By rotating the analysing polariser 4 about the laser beam propagation direction (changing its azimuthal angle), transverse coordinates, where local polarisations (vectors in the distribution 14) are parallel to the polariser's 4 optical axis 15, changes. Therefore, various output transverse intensity distributions are obtained.

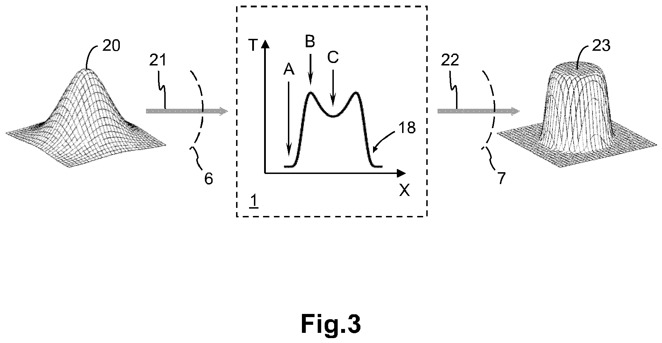

Fig.3 illustrates conversion of the Gaussian laser beam into a flat-top beam employing the laser beam shaper according to this invention. The incident laser beam 21 featuring a Gaussian-shaped spatial intensity profile 20 is converter into a laser beam 22 having a flat-top intensity profile 23. The beam shaper 1 is characterised by a transmission distribution $T_{XY}$ a cross-section 18 of which is an M-like function: has a minimum (≠0) at the centre C, at some radius [zone B] - has a maximum (T=1), yet further - transmission rapidly decreases to zero [zone A]. A shape of flat-top laser beams is often approximated by super-Gaussian functions which may have circular or rectangular symmetry. A circular flat-top intensity distribution may be expressed by a super-Gaussian function of the n-th order as follows:

$$I(x,y) = I_0 \exp\left(-\frac{\sqrt{2(x^2+y^2)}}{2\sigma}\right)^n ,$$

where n - the order of the super-Gaussian function which must be an even integer number, σ - width parameter. As already is explained before, the wavefront 7 at the output is about the same as the initial wavefront 6. The scattered light arising due to scattering on the inscribed homogeneities does not spoil the wavefront because its divergence is high and it can be easily filtered.

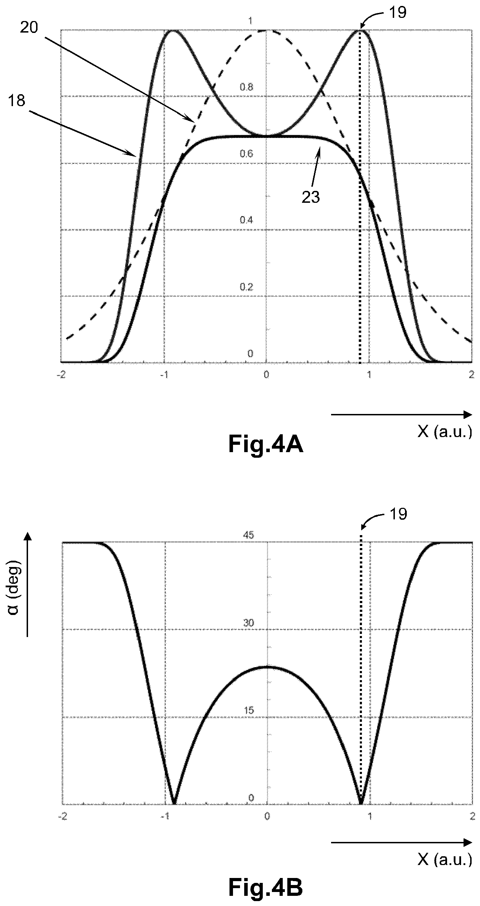

Fig.4A depicts a theoretical continuously varying transmission function 18, i.e. a cross-section along one transverse coordinate of a calculated transmission distribution $T_{XY}$, required for conversion of the laser beam with the Gaussian profile 20 into the beam characterised by the super-Gaussian function 23 of the 6-th order. It is estimated from: $T_{XY} = Const* I_{superGauss}/I_{Gauss}$, wherein *Const* is a normalisation constant. The transverse coordinate is normalised to a half-width at half-maximum (HWHM) of the initial Gaussian profile 20.

A theoretical maximum power conversion efficiency when converting the Gaussian beam into the super-Gaussian beam of the 6-th order is approximately equal to 70%. As already mentioned before, there are additional power losses associated with Rayleigh scattering which do not exceed 15%, therefore, a value of 50% of overall efficiency of the beam shaper of this invention is easily achieved.

In Fig.4B, one of possible realisations of nanogratings' orientations is shown in order to obtain the transmission function 18 of Fig.4A. It is designed for the beam shaper configuration in which the optical axis 15 of the polariser 4 is parallel to the initial polarisation direction $P_0$ (as in Fig.2). Therefore, maximum transmission (T=1) is achieved in transverse coordinates where fast axes 10 of nanogratings are parallel ($\alpha$=0°) to the vector $P_0$, while zero transmission is achieved if fast axes 10 of nanogratings make $\alpha$=45° angle with the vector $P_0$ (a final polarisation will be rotated by 90 degrees and, thus, blocked by the polariser 4). In a central part of the beam, where only a partial intensity attenuation is needed, nanogratings orientations are intermediate, $\alpha$ varies between 0 and 23.6 degrees.

Identical pattern of nanogratings' orientations would be needed in an alternative beam shaper's configuration, in which the optical axis 15 of the analysing polariser 4 is perpendicular the initial polarisation vector $P_0$ and then a reflected light from the polariser 4 is used as the output beam.

It is easy to understand that other variations of the beam shaper are possible. Different patterns of nanogratings' orientations will still result in the transmission distribution $T_{XY}$ if: 1) the transmitted light from the polariser 4 is used as the output beam, but the optical axis 15 is perpendicular to the vector $P_0$; 2) the polariser is azimuthally rotated at an intermediate angle between 0 and 90 degrees.

A common formula describing local orientations of nanogratings is:

$$\alpha(x,y) = \frac{1}{2}\left[\beta - \arccos\left(T(x,y)\right)\right],$$

if the output beam is radiation transmitted by the polariser 4, or

$$\alpha(x,y) = 45 - \frac{1}{2}\left[\beta - \arccos\left(T(x,y)\right)\right],$$

if the output beam is radiation reflected by the polariser 4. Here $\alpha(x,y)$ - an angle (value in degrees) between fast axis 10 of a nanograting and the initial polarisation direction $P_0$ at a certain transverse coordinate, $T(x, y)$ - a desired local transmission value, $\beta$ - an angle between the optical axis 15 of the analysing polariser 4 and the initial polarisation direction $P_0$. These relationships are suitable for estimation of nanogratings' orientation pattern for any arbitrary transmission distribution $T_{XY}$ to obtain.

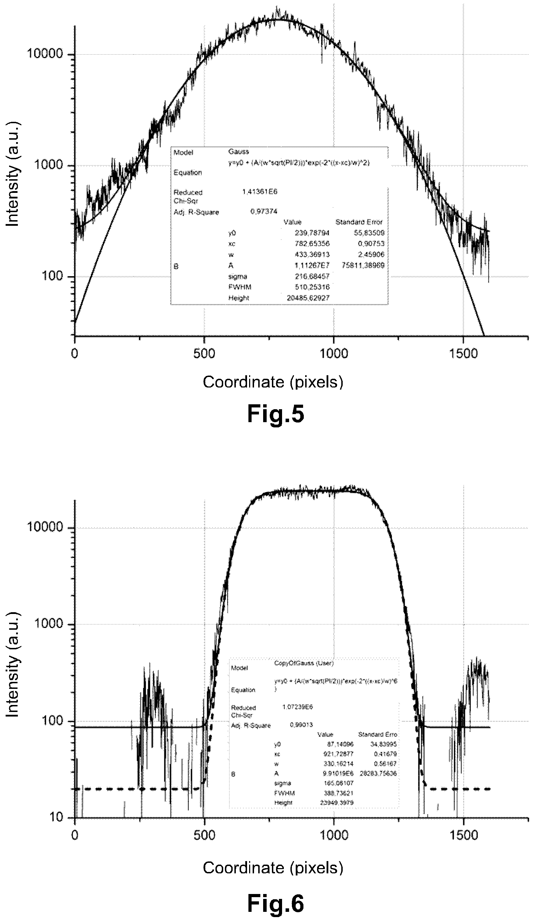

Fig.5 depicts a CCD camera measured intensity distribution of an initial Gaussian laser beam (along one coordinate, in semi-logarithmic scale). Fig.6 depicts a measured intensity distribution of an apodised laser beam at the output of the beam shaper 1 which is characterised by the nanogratings' orientation function of Fig.4B formed inside shaper's polarisation transforming optical element 2. The beam shaping experiment was made with 1064nm radiation, and said retardance of $\pi$ radians inside the element 2 was attained by inscribing two anisotropic layers 8. Super-Gaussian functions of the 6-th order (a solid line and a dashed line - two curves with different background levels selected) perfectly fit experimental data in a central part of the profile. A background radiation seen at the side regions is associated to unblocked side wings of the Gaussian profile and arise due to imperfect alignment of the shaper's optical elements. Nevertheless, it is weak, only about 1% of maximum intensity, also it may be easily blocked by additional diaphragms or by apertures of consequent optical elements in an optical system.

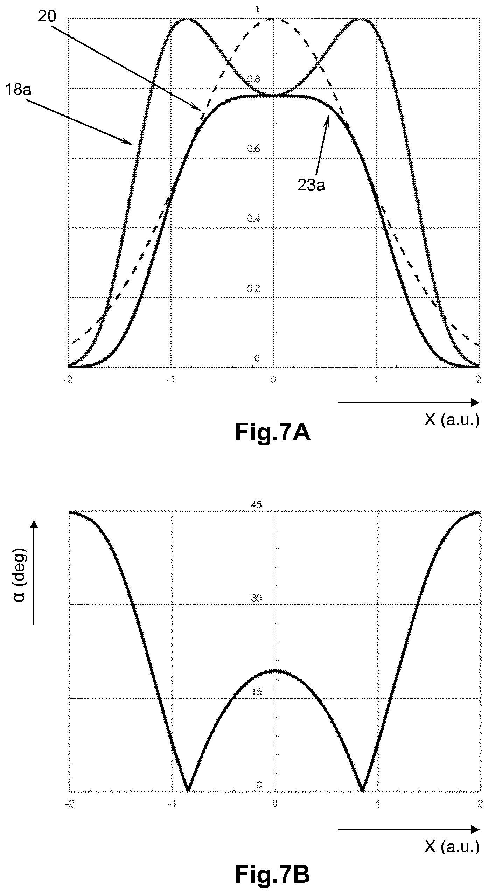

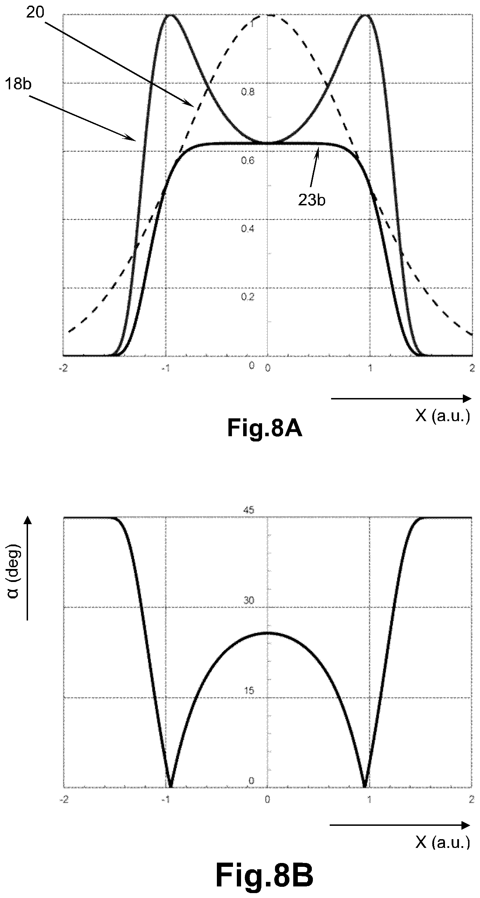

In Fig.7A-Fig.8B solutions for formation of flat-top beams of slightly different shape are illustrated. Fig.7A depicts a transmission function 18a required for conversion of the Gaussian profile 20 into a profile characterised by a super-Gaussian function 23a of the 4-th order, while Fig.8A depicts a transmission function 18b required for conversion of the Gaussian profile 20 into a profile characterised by a super-Gaussian function 23b of the 8-th order. In Fig.7B and Fig.8B appropriate nanogratings' orientation functions are shown for a configuration where the optical axis 15 of the analysing polariser 4 is parallel to the initial polarisation direction $P_0$ and the output is formed from radiation transmitted by the polariser 4. The beam profile characterised by the super-Gaussian function of the higher order has a wider flat central part while edges become steeper, but maximum intensity value and power conversion efficiency reduces.

A theoretical maximum power conversion efficiency without taking into account losses related to Rayleigh scattering while transforming the Gaussian laser beam into the super-Gaussian beam of the 8-th order is equal to 67%, while into the super-Gaussian beam of the 4-th order - even about 80%. The super-Gaussian beam profile of the 6-th order is a compromise between a purely flat top shape of the beam profile and a sufficient power conversion efficiency which, in this case, is about 70%.

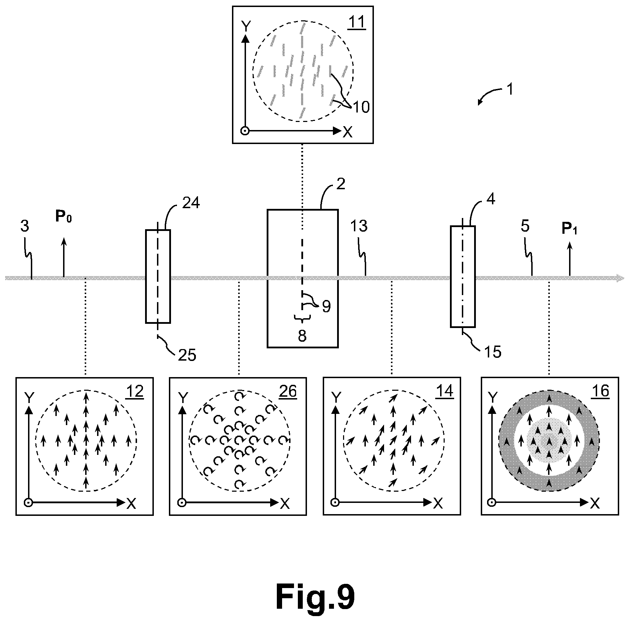

Yet another preferable realisation of the present invention is illustrated in Fig.9. Herein the beam shaper 1 comprises an additional quarter-wave plate 24, while a polarisation transforming element 2 has a sum thickness of anisotropic layers 8 such that two orthogonal polarisation components accumulate a phase retardation equal to $\pi/2$ radians. Said additional quarter-wave plate 24 is placed on the way of the initial laser beam 3 before the element 2, and its optical axis 25 is oriented at 45-degrees angle with respect to polarisation vector $P_0$. Therefore, the pattern 12 of linear polarisation vectors is firstly transformed into a pattern 26 in which polarisation is circular but mutually identical in all transverse coordinates. The polarisation transforming optical element 2 with the inscribed $\pi/2$-retardance now may be thought as if constructed of multiple quarter-wave plates with spatially variable orientations of fast axes. As a result, each birefringent region 9 together with the preceding quarter-wave plate 24 contributes to a phase retardation of $\pi$ radians, and a resultant local polarisation is linear, but its orientation depends on location. A polarisation orientation pattern 14 of the laser beam 13 at the output of the element 2 is the same as in the previously described configuration. Retardance of $\pi/2$ radians is attained with a lower number or less thickness of anisotropic layers 8, while the same resultant polarisation pattern, and therefore, beam profile, is formed.

The configuration of Fig.9 is advantageous over the configuration of Fig.2 in the following aspects. Retardance of $\pi$ radians is not easy to achieve even in fused silica where phenomenon of formation of self-assembled nanogratings manifests most strongly among silica-like glasses. For visible light, retardance of $\pi/2$ radians as well as $\pi$ radians may be attained in a single layer. However, for near infrared wavelengths, e.g. 1064nm or longer, retardance of $\pi$ radians can hardly be inscribed in a single anisotropic layer. Two anisotropic layers 8 were required. For yet longer wavelengths, even more layers might be necessary. Therefore, configuration of Fig.9 allows for realisation of the laser beam shaper for near infrared spectral region by forming only one anisotropic layer 8. On the other hand, it gives a possibility to extend the spectral range where an already-fabricated beam shaper may be used: the shaper's optical element 2 with a certain thickness and number of anisotropic layers 8 that works as a structured half-wave plate for 1064nm (as in Fig.2) may be employed as a structured quarter-wave plate (as in Fig.9) for longer wavelengths.

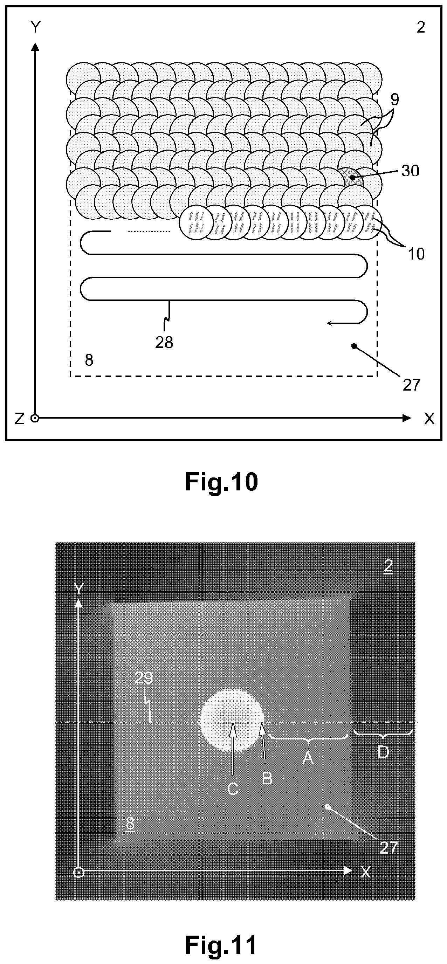

Fig.10 illustrates a fabrication method of the polarisation transforming optical element 2 which makes a basis of the laser beam shaper 1 of this invention. Ultrafast radiation of femtosecond pulses are focused inside a volume of an optically isotropic glass, for example, fused silica glass, sample. Having an appropriate pulse energy, formation of sub-wavelength nanogratings is possible. By selecting fabrication parameters (energy, pulse repetition rate of the writing radiation, scanning speed, focusing conditions, etc.), birefringence that is induced may be varied. A pattern of nanogratings orientations is formed by scanning an area 27 of said glass sample. Transversal dimensions of said area 27 have to be at least three times larger than full-width at half maximum (FWHM) of the incident beam in order to fully attenuate radiation at the peripheral regions of Gaussian distribution. At focus of the writing radiation, a region 9 of the sample of a size from 10 to 100 microns is affected. Many nanogratings form in there. In the same region 9 all nanogratings are mutually parallel. A length of the focal region of the writing radiation determines the thickness of the anisotropic layer 8. By controlling polarisation of the writing ultrafast radiation during a scanning operation of the sample a desired pattern of nanogratings' fast axes 10 orientations is inscribed. Several scanning trajectories are possible: raster (always from left to right), forward-backward (from left to right at first line, from right to left at second line, etc.; trajectory 28 in Fig.10), radial (from centre towards periphery) or concentric (circles sharing the same centre). The inscribed nanostructure remains inside a glass material after stopping writing radiation exposure, and is highly persistent to environmental impacts.

Another aspect - said regions 9 are overlapped without leaving unaffected zones in order to ensure refractive index homogeneity that preserves a beam wavefront. It also ensures an approximately homogeneous Rayleigh scattering across the beam. Further, the more dense arrangement of regions 9 is done, the more accurately a continuous nanogratings' orientation function, such as depicted in Fig.4B, Fig.7B or Fig.8B, is replicated. Each of the regions may also be created by a sequence of pulses, for example doublets of pulses. The element indicated by 30 corresponds to a single phase retardation plate from which the polarisation transforming optical element 2 is "constructed".

The maximum achievable difference between two indices of refraction for two orthogonal polarisations is limited. Also, there is a slight dependence on the wavelength for which the beam shaper is designed. As said before, retardance of $\pi$ radians is attained in a single layer (during one scanning operation) only for wavelength from the visible spectral range. For near infrared wavelengths, for example, for 1064nm, $\pi$-retardance is attained only after scanning twice. The second layer 8 is inscribed by focusing the writing radiation in a different depth of the sample. While, for fabrication of the element 2 with $\pi/2$-retardance, only one layer inscription is enough. The polarisation transforming optical element 2 is designed for a certain wavelength, however, it still "works" in a spectral range of about several tens of nanometres in width.

In Fig.11 an image of a real fabricated polarisation transforming optical element 2 is given. The image was taken with an optical microscope by placing the element 2 between two crossed polarisers (cross polarised light photography). A square-shaped area 27 is clearly seen in a centre of the photo: it indicates a region where the nanogratings have been inscribed by the femtosecond radiation. The element 2 was fabricated for a configuration of the beam shaper in which transmission axis 15 of the polarisation analysing element 4 has to be perpendicular to the initial polarisation vector $P_0$, therefore, transmitted radiation in the crossed-light configuration replicates the transmission distribution $T_{XY}$ that was intended to be created.

In a cross-section 29, zones of zero (D) and partial (A, B, C) illuminance can be distinguished. The zone D is outside said scanned area 27, and therefore, light is completely blocked by crossed polarisers of the microscope. Within said area 27, there is a continuously varying illuminance. This variation replicates the previously described continuously varying transmission function 18 having the zone B of highest transmission, the zone C of intermediate transmission and the zone A of lowest one. Transmission is not equal to zero in the zone A since the inscribed nanogratings cause scattering; the scattered light is chaotically polarised and, thus, is not completely blocked by the analysing polariser. Since a contribution of the scattered light is the same in all transverse coordinates of the area 27, it does not influence a shape of the transmission profile 18. The highly-divergent depolarised scattered light can be easily filtered.

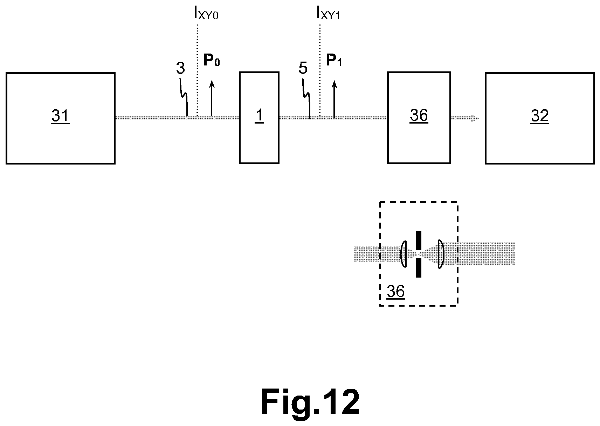

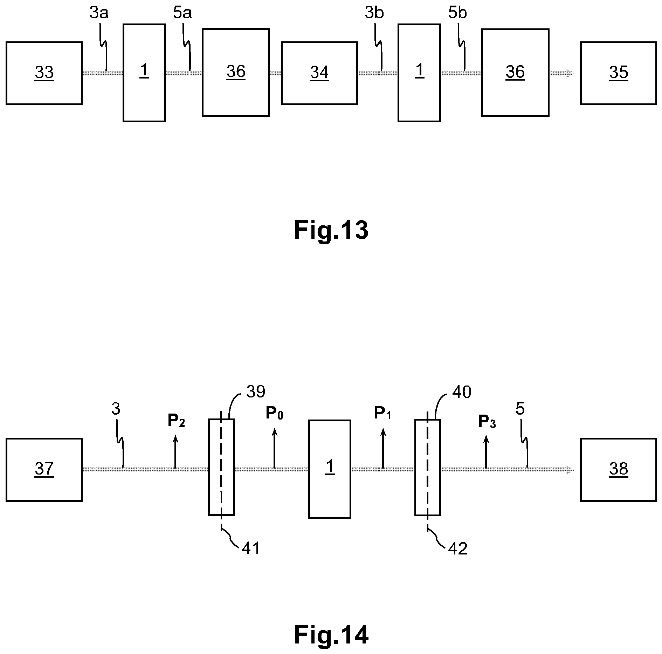

Other variants of the incorporation of the beam shaper in optical schemes are revealed in Figs.12-15. When amplifying laser radiation in a quantum amplifier, it is desirable to form a flat-top beam in a laser because it fills an active element of the amplifier more homogeneously, and more effective amplification is achieved. Steep edges of the beam intensity profile allows to avoid diffraction on the active element's aperture, and therefore, to avoid intensity ripples. The beam shaping system 1 of this invention can be utilised for formation of flat-top beams in a master oscillator-power amplifier system by placing it between an oscillator 31 and an amplifier 32 (Fig.12), or in a multi-stage amplifying system by placing it between any adjacent amplifiers in a series of amplifiers 33, 34, 35 (Fig.13). In order to block the scattered laser radiation, spatial filtering may be done after each beam profile formation procedure in a spatial filter 36.

Yet further applications of the beam shaper of this invention in laser systems cover:

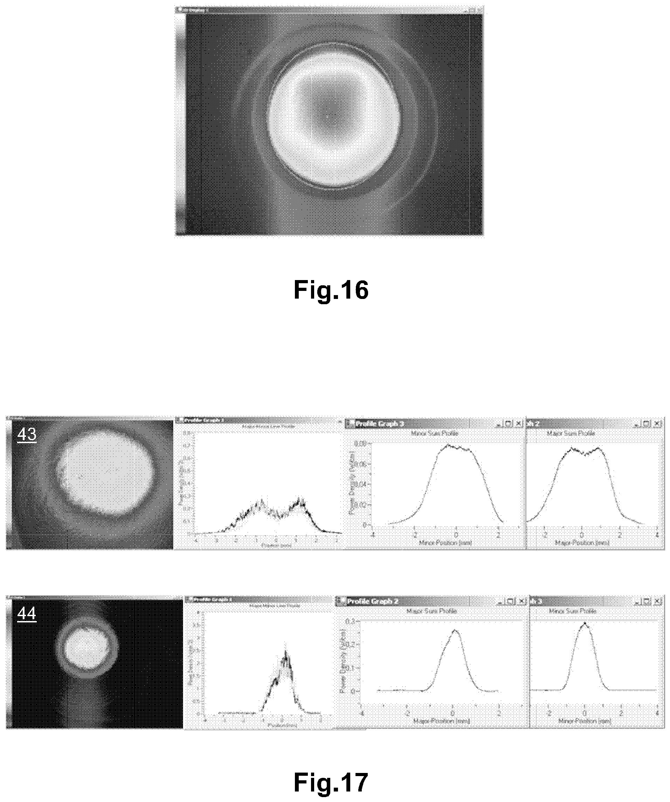

1) Symmetrisation of a generated laser beam. For example, in a side-pumped scheme of an active element of a laser oscillator; transverse intensity profile of a generated laser beam may reflect a spatial arrangement of pumping diodes. Fig.16 depicts a pentagon-like intensity distribution which arises due to side-pumping by five diodes arranged at equal azimuthal angles around the active element. Such laser beam can be reshaped into a circular or square flat-top beam with the use of the beam shaping arrangement of this invention.

2) Other type of beam profile correction, for example, pre-shaping of a seeding beam in order to get a desired intensity profile at an output of a consequent laser amplifier. This is also actual for side pumped arrangement: amount of an absorbed pumping power may be higher at the centre than in periphery of an active element of the amplifier, e.g. 32, 34, 35 (Fig.12, Fig.13). Therefore, it is desirable to provide a modified, non-Gaussian and even not a flat-top beam, from a preceding stage, i.e. 31, 32, of the laser system. A beam intensity distribution with a dip in the middle would mostly be desirable. Thereby compensation of lower gain in periphery of the active element by higher intensity of the seeding beam is feasible. In Fig.17, 43 indicates 2D intensity distribution and profiles along X, and Y coordinates of a seeding beam which has lower intensity in the middle (a dip); 44 - intensity distribution and profiles at the output of the amplifier. Laser beam with intensity distribution of the type 43 can be formed with the use of the beam shaping arrangement of this invention.

3) Various beam shaping tasks in optical parametric amplifiers. If 32 (or 34) (Fig.12, Fig.13) is an optical parametric amplification crystal, there may be desirable to have a pumping beam 5 (or 5a) of a particular shape.

To summarise, laser beams 3, 3a, 3b in Fig.12 and Fig.13 represent initial beams of any arbitrary intensity distribution $I_{XY0}$, while laser beams 5, 5a, 5b - reshaped beams of a desirable resultant intensity distribution $I_{XY1}$.

Yet another modification of the optical arrangement for the laser beam shaping and its incorporation into an optical scheme, comprises a laser system wherein an active element of the amplifier 32, 34 and/or 35 is anisotropic what means that it can be employed for polarisation analysis, and therefore, the separate polariser 4 is not needed.

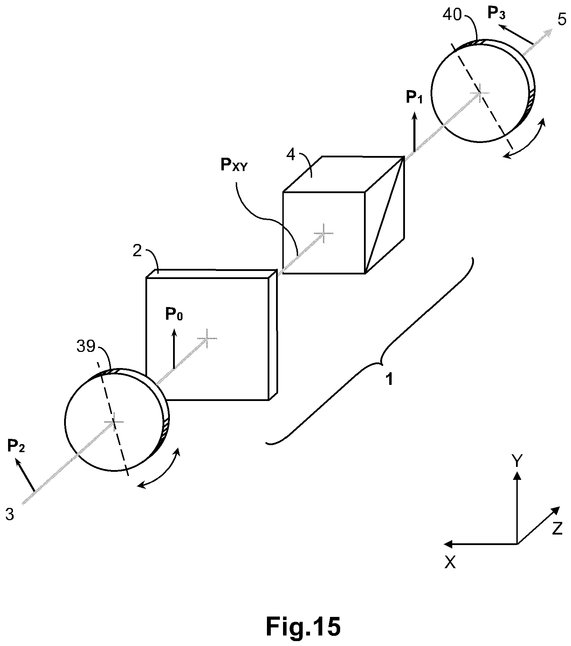

The most practical configuration of the optical arrangement for laser beam shaping according to this invention is illustrated in Fig.14 and Fig.15. An element 37 represents the oscillator 31 or any of amplifiers 33 or 34, output beams of which are intended to be reshaped. An element 38 represents any of the amplifiers 32, 34 or 35 which accepts the reshaped beam. By supplementing the optical system by additional half-wave plates 39 and 40, it is possible to make orientation of polarisation of the output beam independent from that of the input beam. Therefore, the input laser beam 3 may have a polarisation direction $P_2$, while the output laser beam 5 may have a polarisation direction $P_3$ which may form any arbitrary angle between each other. The first half-wave plate 39 is used to rotate polarisation direction of the input laser beam 3 to align direction for which the shaper's element 2 is designed. Therefore, a fast axis 41 of the first half-wave plate 39 must be oriented at half the angle between said $P_2$ and $P_0$ directions. Alternatively, a polariser may be used as the element 39 instead of the half-wave plate if the input laser radiation is unpolarised. The second half-wave plate 40 is destined to rotate polarisation direction of a laser beam at the output of the beam shaper 1 to align direction $P_3$ which is a direction required for consequent optical element of the system. Therefore, a fast axis 42 of the second half-wave plate 40 must be oriented at half the angle between said $P_1$ and $P_3$ directions. Thus polarisations $P_3$ and $P_2$ of the amplifier 38 and the preceding stage 37 may not coincide and may differ from characteristic directions $P_0$ and $P_1$ of the beam shaping arrangement 1. The configuration of Fig.14, Fig.15 provides flexibility - azimuthal orientation of elements 2 and 4 can be fixed, while polarisation orientations of other system elements may be variable. Further, by interposing yet another half-wave plate between the shaper's elements 2 and 4 (not indicated in Figs.14, 15) adjustment of the shaper's arrangement becomes simple because slight azimuthal misalignment of elements 2 and 4 can be compensated.

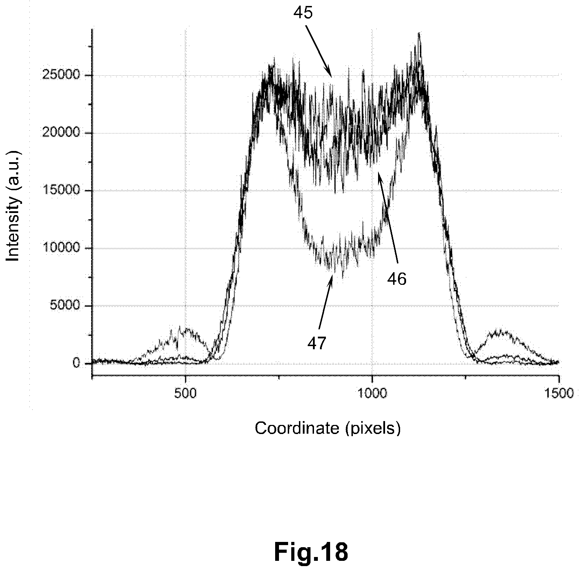

Another aspect related the optical arrangement for laser beam shaping of this invention - several differing output intensity distributions $I_{XY1}$ may be obtained for an already-fabricated polarisation transforming element 2 by only rotating the supplementary half-wave plates (39, 40, see Fig.14, or the one interposed between the elements 2 and 4) in an azimuthal plane. Fig.18 depicts three different intensity profiles obtained from an initially Gaussian beam by the beam shaper designed to form a flat-top beam, a profile of which mathematically can be defined by a super-Gaussian function. Experimentally measured curves 45, 46 and 47 correspond to three different azimuthal orientations of the waveplate interposed between the elements 2 and 4. Similarly, variation of output intensity profile may be obtained if orientation of the waveplate 39 is varied. By altering polarisation direction of a laser beam incident to the element 2, another polarisation pattern $P_{XY}$ and therefore, $T_{XY}$ is obtained. As it is evident from Fig.18, not only a flat-top beam profile, but also a profile with a dip in the middle is obtained.

Yet another way to obtain various output beam intensity profiles while having a fabricated optical element with a predetermined nanogratings' orientation pattern is to adjust a diameter of the input laser beam 3. The $T_{XY}$ multiplied by a modified initial intensity distribution results in a modified output intensity distribution $I_{XY1}$.

In general any material in which said phenomenon of formation of self-assembled nanogratings occurs is suitable for fabrication of the polarisation transforming optical element 2. Analogously, any other polarisation selective element, that transmits one polarisation component but reflects a perpendicular one, can be employed as the polarisation analysing element 4. A list comprises Brewster type thin film polarisers, Nicol prism, Glan prism and others.

A spectral range in which the beam shaping system of this invention can be realised depend on features of the material in which said double-refracting nanogratings are inscribed and on the operating wavelength, i.e. the wavelength of the beam that is reshaped. We realised and experimentally tested apodisers (beam shapers that convert Gaussian beams into flat-tops) for a wavelength range from 400nm up to 1550nm. The spectral range could also be extended towards longer wavelengths by increasing a number of layers, using pulse sequences, or altering other fabrication parameters.

Although in all the given examples patterns of nanogratings' orientations, polarisation and transmission having an axial symmetry are described, the method of this invention can be applied for forming a transmission distribution arbitrarily shaped in XY plane. The beam shaper may be utilised for conversion of an asymmetric laser beam into a beam with symmetry.

Description of the best implementation choices was given above in order to illustrate and explain this invention. It is not a complete or limiting description specifying a precise mode of implementation. A variety of modifications and variations falling within the spirit and scope of this invention may be evident to those ordinary skilled in the art. Accordingly, the whole scope of protection of this invention is defined by the appended claims .

## Claims

1. OPTICAL ARRANGEMENT (1) FOR LASER BEAM SHAPING comprising

   - a polarisation transforming optical element (2) which has a different impact on polarisation of an incident laser radiation at various transverse coordinates in the element's (2) aperture and
   - a polarisation analysing optical element (4), transmission and reflection of which depend on polarisation orientation of radiation incident to this optical element (4),

   arranged sequentially on an optical path of an input laser beam (3) which is polarised linearly and has a certain curvature of its wavefront (6),
   wherein
   said polarisation transforming optical element (2) and polarisation analysing optical element (4) together contribute to spatially variable power losses and create a predetermined transmission pattern, defined by a distribution $T_{XY}$,
   thus forming an output laser beam (5), at a plane perpendicular to laser beam propagation direction having an intensity distribution $I_{XY1}$ which does not coincide with an intensity distribution $I_{XY0}$ of said input laser beam (3),
   wherein a wavefront (7) of the formed output laser beam (5) coincides with the wavefront (6) of the input laser beam (3) within a half of a wavelength of the input laser beam (3);
   **characterised in that**
   said polarisation transforming optical element (2) has features of a phase retardation plate, and is fabricated from a transparent and optically isotropic material by forming in its volume at least one anisotropic layer (8) with double-refracting nanogratings resulting from self-assembly of said material due to exposure of linearly polarised femtosecond laser radiation,
   wherein
   equal phase retardations between two orthogonal polarisation components at all transverse coordinates of said formed at least one anisotropic layer (8) are attained, while said different impact on polarisation of the incident radiation at various transverse coordinates in the element's (2) aperture is achieved by selecting proper angles between orientations of fast axes (10) of said double-refracting nanogratings and a linear polarisation direction $P_0$ of the input laser beam (3).

2. OPTICAL ARRANGEMENT (1) according to claim 1, wherein
a total thickness of said at least one anisotropic layer (8) formed in a volume of said optical element (2) ensures phase retardations of $\pi$ radians between two orthogonal polarisation components to be attained at all transverse coordinates of said at least one anisotropic layer (8).

3. OPTICAL ARRANGEMENT (1) according to claim 1, wherein
a total thickness of said at least one anisotropic layer (8) formed in a volume of said optical element (2) ensures phase retardations of $\pi/2$ radians between two orthogonal polarisation components to be attained at all transverse coordinates of said at least one anisotropic layer (8), while said OPTICAL ARRANGEMENT (1) also includes a quarter-wave plate (24) placed on the optical path of the input laser beam (3) before the optical element (2).

4. OPTICAL ARRANGEMENT according to any one of the preceding claims, wherein
the wavelength of the input laser beam (3) is within a range from 400nm to 1550nm.

5. OPTICAL ARRANGEMENT according to any one of the preceding claims, wherein
the output laser beam (5) is transmitted by the polarisation analysing optical element (4).

6. OPTICAL ARRANGEMENT according to any one of claims 1-4, wherein
the output laser beam (5) is reflected by the polarisation analysing optical element (4).

7. OPTICAL ARRANGEMENT according to any one of the preceding claims, wherein
said transparent and optically isotropic material from which the optical element (2) is fabricated is fused silica.

8. OPTICAL ARRANGEMENT according to any one of claims 1-6, wherein
said transparent and optically isotropic material from which the optical element (2) is fabricated is $TiO_2$:$SiO_2$ glass.

9. OPTICAL ARRANGEMENT according to any one of the preceding claims, wherein
said polarisation analysing optical element (4) is a linear polariser.

10. OPTICAL ARRANGEMENT according to any one of the preceding claims, wherein
a transmission distribution $T_{XY}$ with an M-shaped one-dimensional profile (18) is suitable for converting an input laser beam (21) with a Gaussian profile (20) into an output laser beam (22) **characterised by** a super-Gaussian profile (23).

11. OPTICAL ARRANGEMENT according to claim 10, wherein
total power losses, including those due to scattering on inhomogeneities arising during fabrication of the optical element (2), do not exceed 50%.

12. Utilisation of the OPTICAL ARRANGEMENT (1) FOR LASER BEAM SHAPING according to any one of the preceding claims,
in a laser system between an oscillator (31) and an amplifier (32) or between any adjacent amplifiers in a series of amplifiers (33, 34, 35).

13. Utilisation according to claim 12, wherein
the formed laser beam (5) at the output of said OPTICAL ARRANGEMENT (1) FOR LASER BEAM SHAPING propagates through a spatial filtering system (36).

14. Utilisation according to any one of claims 12-13, wherein
an active element of the laser amplifier (32, 34, 35) which is situated after said OPTICAL ARRANGEMENT (1) FOR LASER BEAM SHAPING is anisotropic and acts as a polarisation analysing optical element, while said polarisation analysing optical element (4) is excluded from a construction of the OPTICAL ARRANGEMENT (1) FOR LASER BEAM SHAPING.

15. Utilisation according to any one of claims 12-14, wherein
at least one half-wave plate (39, 40) is placed on a path of a laser beam in a gap between said oscillator (31) or said amplifier (33) and said OPTICAL ARRANGEMENT (1) FOR LASER BEAM SHAPING and/or in a gap between said OPTICAL ARRANGEMENT (1) FOR LASER BEAM SHAPING and a consequent amplifier (32, 34, 35).

**Patentansprüche**

1. OPTISCHE ANLAGE (1) ZUR LASERSTRAHLFORMUNG, bestehend aus

   - einem optischen Element (2) für Polarisationsumwandlung, das bei unterschiedlichen Querkoordinaten verschiedene Einflüsse auf die Polarisation einer einfallenden Laserstrahlung in der Blende des Elements (2) ausübt und
   - einem optischen Element (4) für Polarisationsanalyse, dessen Übertragung und Reflexion von der Polarisationsstrahlungsrichtung auf das optische Element (4) abhängt,

   angeordnet der Reihe nach auf dem optischen Weg des Eingangslaserstrahls (3), der linear polarisiert ist und eine gewisse Krümmung in seiner Wellenfront (6) hat,
   wobei
   das genannte optische Element für Polarisationsumwandlung (2) und das optische Element für Polarisationsanalyse (4) gemeinsam zu räumlich variablen Leistungsverlusten beitragen und ein vorbestimmtes Übertragungsmuster schaffen, **gekennzeichnet durch** die Verteilung $T_{XY}$, wodurch der Ausgangslaserstrahl (5) mit der Intensitätsverteilung $I_{XY1}$ in einer Ebene senkrecht zur Laserstrahl-Ausbreitungsrichtung gebildet wird, was mit der Intensitätsverteilung $I_{XY0}$ des genannten Eingangslaserstrahls (3) nicht übereinstimmt,
   wobei die Wellenfront (7) des gebildeten Ausgangslaserstrahls (5) von der Wellenfront (6) des Eingangslaserstrahls (3) **durch** eine Hälfte der Wellenlänge des Eingangslaserstrahls (3) abweicht;
   **dadurch gekennzeichnet, dass**
   sich das genannte optische Element für Polarisationsumwandlung (2) **durch** Eigenschaften einer Phasenverzögerungsplatte auszeichnet und aus einem transparenten und optisch isotropen Material hergestellt wird, wobei in seinem Volumen mindestens eine anisotrope Schicht (8) mit doppelbrechenden Nanogittern nach der Selbstanordnung des genannten Materials unter der Einwirkung der linear polarisierten Femtosekunden-Laserstrahlung entsteht,
   wobei
   Gleichphasenverzögerungen zwischen zwei orthogonalen Polarisationskomponenten bei allen Querkoordinaten der genannten mindestens einer gebildeten anisotropen Schicht (8) erreicht werden, während genannte verschiedene Auswirkungen auf die Polarisation der einfallenden Strahlung bei verschiedenen Querkoordinaten in der Blende des Elements (2) erreicht werden und richtige Winkeln zwischen Richtungen der schnellen Achsen (10) der genannten doppelbrechenden Nanogittern und einer linearen Polarisationsrichtung $P_0$ des Eingangslaser-

strahls (3) gewählt werden.

2. OPTISCHE ANLAGE (1) nach Anspruch 1,
   wobei
   die Gesamtdicke zumindest einer genannten anisotropen Schicht (8), gebildet im Volumen des genannten optischen Elements (2), gewährleistet, dass Phasenverzögerungen von $\pi$-Radianten zwischen zwei orthogonalen Polarisationskomponenten bei allen Querkoordinaten der anisotropen Schicht erreicht werden (8).

3. OPTISCHE ANLAGE (1) nach dem Anspruch 1,
   wobei
   die Gesamtdicke zumindest einer genannten anisotropen Schicht (8), gebildet im Volumen des genannten optischen Elements (2), gewährleistet, dass Phasenverzögerungen von $\pi/2$-Radianten zwischen zwei orthogonalen Polarisationskomponenten bei allen Querkoordinaten der anisotropen Schicht erreicht werden (8), wobei die genannte OPTISCHE ANLAGE (1) auch eine Viertelwellenplatte (24) umfasst, die auf dem optischen Weg des Eingangslaserstrahls (3) vor dem optischen Element (2) angeordnet wird.

4. OPTISCHE ANLAGE nach einem der vorhergehenden Ansprüche,
   wobei
   die Wellenlänge des Eingangslaserstrahls (3) in einem Bereich zwischen 400nm bis 1550nm variiert.

5. OPTISCHE ANLAGE nach einem der vorhergehenden Ansprüche,
   wobei
   der Ausgangslaserstrahl (5) durch das optische Element für die Polarisationsanalyse (4) übertragen wird.

6. OPTISCHE ANLAGE nach einem der Ansprüche 1 bis 4,
   wobei
   der Ausgangslaserstrahl (5) durch das optische Element für die Polarisationsanalyse (4) zurückgeworfen wird.

7. OPTISCHE ANLAGE nach einem der vorhergehenden Ansprüche,
   wobei
   das genannte transparente und optisch isotrope Material, aus dem das optische Element (2) hergestellt wird, geschmolzener Quarz ist.

8. OPTISCHE ANLAGE nach einem der Ansprüche 1 bis 6,
   worin
   das genannte transparente und optisch isotrope Material, aus dem das optische Element (2) hergestellt

wird, Glas $TiO_2$:$SiO_2$ ist.

9. OPTISCHE ANLAGE nach einem der vorhergehenden Ansprüche,
   worin
   das genannte optische Element für die Polarisationsanalyse (4) ein linearer Polarisator ist.

10. OPTISCHE ANLAGE nach einem der vorhergehenden Ansprüche,
    wobei
    die Übertragungsverteilung $T_{XY}$ mit einem M-förmigen eindimensionalen Profil (18) sich für die Umwandlung eines Eingangslaserstrahls (21) mit einem Gaussschen-Profil (20) zu einem Ausgangslaserstrahl (22) mit einem Super-Gaussschen-Profil (23) eignet.

11. OPTISCHE ANLAGE (1) nach dem Anspruch 10,
    wobei
    die gesamten Leistungsverluste, einschließlich solcher, die bei der Herstellung des optischen Elements (2) aufgrund Streuung an Inhomogenitäten entstehen, 50 % nicht überschreiten.

12. Verwendung der OPTISCHEN ANLAGE (1) ZUR LASERSTRAHLFORMUNG nach einem der vorhergehenden Ansprüche in einem Lasersystem zwischen Oszillator (31) und einem Verstärker (32) oder zwischen beliebigen angrenzenden Verstärkern in einer Reihe von Verstärkern (33, 34, 35).

13. Verwendung nach dem Anspruch 12,
    wobei
    der gebildete Laserstrahl (5) am Ausgang der genannten OPTISCHEN ANLAGE (1) ZUR LASERSTRAHLFORMUNG sich durch ein räumliches Filtersystem (36) verbreitet.

14. Verwendung nach einem der Ansprüche 12 bis 13,
    wobei
    ein aktives Element des Laserverstärkers (32, 34, 35), das hinter der genannten OPTISCHEN ANLAGE (1) ZUR LASERSTRAHLFORMUNG liegt, anisotrop ist und als ein optisches Element für die Polarisationsanalyse fungiert, während das genannte optische Element für die Polarisationsanalyse (4) nicht zur Konstruktion der OPTISCHEN ANLAGE (1) ZUR LASERSTRAHLFORMUNG gehört.

15. Verwendung nach einem der Ansprüche 12 bis 14,
    wobei
    sich mindestens eine Halbwellenplatte (39, 40) auf dem Weg des Laserstrahls in einer Lücke zwischen dem genannten Oszillator (31) oder Verstärker (33) und der genannten OPTISCHEN ANLAGE (1) ZUR LASERSTRAHLFORMUNG und/oder in einer Lücke zwischen der genannten OPTISCHEN ANLAGE (1) ZUR LASERSTRAHLFORMUNG und einem nachfolgenden Verstärker (32, 34, 35) befindet.

**Revendications**

1. UN AGENCEMENT OPTIQUE (1) POUR LA FORMATION D'UN FAISCEAU LASER comprenant

   - un élément optique de transformation de la polarisation (2) qui a un impact différent sur la polarisation d'un rayonnement laser incident à diverses coordonnées transversales dans l'ouverture de l'élément (2) et
   - un élément optique d'analyse de la polarisation (4) dont la transmission et la réflexion dépendent de l'orientation de la polarisation du rayonnement incident à cet élément optique (4),

   disposé séquentiellement sur un trajet optique d'un faisceau laser d'entrée (3) qui est polarisé linéairement et présente une certaine courbure de son front d'onde (6),
   dans lequel
   ledit élément optique de transformation de la polarisation (2) et l'élément optique d'analyse de la polarisation (4) contribuent ensemble à des pertes de puissance spatialement variables et créent un motif de transmission prédéterminé, défini par une distribution $T_{XY}$, formant ainsi un faisceau laser de sortie (5), à un plan perpendiculaire à la direction de propagation du faisceau laser ayant une distribution d'intensité $I_{XY1}$ qui ne coïncide pas avec une distribution d'intensité $I_{XY0}$ dudit faisceau laser d'entrée (3),
   dans lequel un front d'onde (7) du faisceau laser de sortie formé (5) coïncide avec le front d'onde (6) du faisceau laser d'entrée (3) dans la moitié d'une longueur d'onde du faisceau laser d'entrée (3);
   **caractérisé en ce que**
   ledit élément optique de transformation de la polarisation (2) présente des caractéristiques d'une lame à retard de phase, et est fabriqué à partir d'un matériau transparent et optiquement isotrope en formant dans son volume au moins une couche anisotrope (8) avec des nano grilles à double réfraction résultant de l'auto-assemblage dudit matériau en raison de l'exposition du rayonnement laser femtoseconde polarisé linéairement,
   dans lequel
   des retards de phase égaux entre deux composants de polarisation orthogonaux à toutes les coordonnées transversales d'au moins une couche anisotrope formée (8) sont obtenus, tandis que ledit impact différent sur la polarisation du rayonnement incident à diverses coordonnées transversales dans l'ouverture de l'élément (2) est réalisé en sélectionnant des angles appropriés entre les orientations d'axes rapides (10) desdites nano grilles à double réfraction et une direction de la polarisation linéaire $P_0$ du faisceau laser d'entrée (3).

**2.** LE AGENCEMENT OPTIQUE (1) selon la revendication 1,
dans lequel
une épaisseur totale d'au moins une couche anisotrope (8) formée dans un volume dudit élément optique (2) assure que des retards de phase de $\pi$ radians entre deux composants de polarisation orthogonaux soient obtenus à toutes les coordonnées transversales d'au moins une couche anisotrope (8).

**3.** LE AGENCEMENT OPTIQUE (1) selon la revendication 1,
dans lequel
une épaisseur totale d'au moins une couche anisotrope (8) formée dans un volume dudit élément optique (2) assure que des retards de phase de $\pi/2$ radians entre deux composants de polarisation orthogonaux soient obtenus à toutes les coordonnées transversales d'au moins une couche anisotrope (8), tandis que ledit AGENCEMENT OPTIQUE (1) comprend également une lame quart d'onde (24) placée sur le trajet optique du faisceau laser d'entrée (3) avant l'élément optique (2).

**4.** LE AGENCEMENT OPTIQUE selon l'une des revendications précédentes,
dans lequel
la longueur d'onde du faisceau laser d'entrée (3) est comprise entre 400nm et 1550nm.

**5.** LE AGENCEMENT OPTIQUE selon l'une des revendications précédentes,
dans lequel
le faisceau laser de sortie (5) est transmis par l'élément optique d'analyse de la polarisation (4).

**6.** LE AGENCEMENT OPTIQUE selon l'une des revendications de 1 à 4,
dans lequel
le faisceau laser de sortie (5) est réfléchi par l'élément optique d'analyse de la polarisation (4).

**7.** LE AGENCEMENT OPTIQUE selon l'une des revendications précédentes,
dans lequel
ledit matériau transparent et optiquement isotrope à partir duquel l'élément optique (2) est fabriqué est de la silice fondue.

**8.** LE AGENCEMENT OPTIQUE selon l'une des revendications de 1 à 6,
dans lequel
ledit matériau transparent et optiquement isotrope à partir duquel l'élément optique (2) est fabriqué est le

verre de $TiO_2:SiO_2$.

**9.** LE AGENCEMENT OPTIQUE selon l'une des revendications précédentes,
dans lequel
ledit élément optique d'analyse de la polarisation (4) est un polariseur linéaire.

**10.** LE AGENCEMENT OPTIQUE selon l'une des revendications précédentes,
dans lequel
une distribution de la transmission $T_{XY}$ avec un profil monodimensionnel en forme de M (18) est adaptée pour convertir un faisceau laser d'entrée (21) avec un profil Gaussien (20) en un faisceau laser de sortie (22), **caractérisé par** un profil super-Gaussien (23).

**11.** LE AGENCEMENT OPTIQUE selon la revendication 10,
dans lequel
les pertes totales de puissance, y compris celles causées par la dispersion sur des inhomogénéités produites au moment de la fabrication de l'élément optique (2), ne dépassent pas 50%.

**12.** Utilisation de l'AGENCEMENT OPTIQUE (1) POUR LA FORMATION D'UN FAISCEAU LASER selon l'une des revendications précédentes, dans un système laser entre un oscillateur (31) et un amplificateur (32) ou entre n'importe quels amplificateurs adjacents dans une série d'amplificateurs (33, 34, 35).

**13.** Utilisation selon la revendication 12,
dans laquelle
le faisceau laser formé (5) à la sortie dudit AGENCEMENT OPTIQUE (1) POUR LA FORMATION D'UN FAISCEAU LASER se propage à travers un système de filtrage spatial (36).

**14.** Utilisation selon l'une des revendications de 12 à 13,
dans laquelle
un élément actif de l'amplificateur laser (32, 34, 35) qui est situé après ledit AGENCEMENT OPTIQUE (1) POUR LA FORMATION D'UN FAISCEAU LASER est anisotrope et agit comme un élément optique d'analyse de la polarisation, tandis que ledit élément optique d'analyse de la polarisation (4) est exclu d'une construction de l'AGENCEMENT OPTIQUE (1) POUR LA FORMATION D'UN FAISCEAU LASER.

**15.** Utilisation selon l'une des revendications de 12 à 14,
dans laquelle
au moins une lame demi-onde (39, 40) est placée sur un trajet d'un faisceau laser dans un intervalle entre ledit oscillateur (31) ou ledit amplificateur (33) et ledit AGENCEMENT OPTIQUE (1) POUR LA FORMATION D'UN FAISCEAU LASER et/ou dans un intervalle entre ledit AGENCEMENT OPTIQUE (1) POUR LA FORMATION D'UN FAISCEAU LASER et un amplificateur (32, 34, 35) consécutif.

$I_{XY0}$

3

**P$_0$**

6

$P_{XY}$

2     4

$T_{XY}$

1

$I_{XY1}$

5

**P$_1$**

7

# Fig.1

**Fig.2**

**Fig.3**

**Fig.4A**

X (a.u.)

**Fig.4B**

X (a.u.)

α (deg)

**Fig.5**

**Fig.6**

**Fig.7A**

**Fig.7B**

**Fig.8A**

X (a.u.)

**Fig.8B**

X (a.u.)

**Fig.9**

**Fig.10**

**Fig.11**

**Fig.12**

3a    5a             3b    5b

| 33 | | 1 | | 36 | | 34 | | 1 | | 36 | | 35 |

**Fig.13**

39    $P_0$    $P_1$    40

3    $P_2$                 $P_3$    5

| 37 | | | 1 | | | 38 |

41        42

**Fig.14**

**Fig.15**

**Fig.16**

**Fig.17**

**Fig.18**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5638220 A
- US 3977772 A
- WO 2014014805 A
- US 8292441 B
- US 7019434 B
- US 4410237 A
- US 6975458 B
- US 3990786 A
- US 4017164 A
- US 3558208 A
- US 3476463 A
- US 6943964 B
- US 3486808 A
- US 8077289 B
- US 6191880 B
- US 8320043 B
- US 2007115551 A
- WO 2011021444 A
- WO 2012150566 A
- US 4679911 A
- US 6259055 B

### Non-patent literature cited in the description

- **J.M.AUERBACH et al.** Serrated-aperture apodizers for high-energy laser systems. *Appl. Optics,* 1994, vol. 33 (15), 3179-3183
- **N.I.POTAPOVA et al.** Apodization of laser radiation by phase apertures. *Sov. J. Q. Electron,* 1992, vol. 22 (5), 419-422
- **HAOTONG MA et al.** Generation of flat-top beam with phase-only liquid crystal spatial light modulators. *Journal of Optics,* 2010, vol. 12, 045704
- **W. W. SIMMONS et al.** Optical Beam Shaping Devices Using Polarization Effects. *APPLIED OPTICS,* 01 July 1974, vol. 13 (7), 1629-1632
- *Optics Letters,* 1980, vol. 5 (11), 491-493
- **J.EGGLESTON et al.** Radial intensity filters using radial birefringent elements. *JOSA,* 1981, vol. 71 (10), 1264-1272
- **L.SUDRIE et al.** Writing of permanent birefringent microlayers in bulk fused silica with femtosecond laser pulses. *Opt. Communications,* 1999, vol. 171, 279-284
- **M.LANCRY et al.** Ultrafast nanoporous silica formation driven by femtosecond laser irradiation. *Laser & Photonics Reviews,* 2013, vol. 7 (6), 953-962
- **M.LANCRY et al.** Dependence of the femtosecond laser refractive index change thresholds on the chemical composition of doped-silica glasses. *Opt. Mat. Express,* 2011, vol. 1 (4), 711-723
- **S.RICHTER et al.** Laser induced nanogratings beyond fused silica - periodic nanostructures in borosilicate glasses and ULE™. *Opt. Mat. Express,* 2013, vol. 3 (8), 1161-1166